# NEW EUROPEAN PATENT SPECIFICATION

(11) **EP 0 377 779 B2**
(45) Date of publication and mention of the opposition decision: **05.09.2001**
(45) Mention of the grant of the patent: 20.05.1998
(21) Application number: 89111695.6
(22) Date of filing: 27.06.1989
(51) Int. Cl.: C22C 21/10, C22F 1/053

(54) **Aluminium alloy product having improved combinations of strength, toughness and corrosion resistance**
Erzeugnis aus einer Aluminium-Legierung mit verbesserten Kombinationen der Festigkeit, der Zähigkeit und der Korrosionsbeständigkeit
Produit en alliage d'aluminium ayant des combinaisons de résistance mécanique, de ténacité et de résistance à la corrosion modifiées

(30) Priority: 13.01.1989 US 297676
(43) Date of publication of application: 18.07.1990
(73) Proprietor: ALUMINUM COMPANY OF AMERICA, Pittsburgh Pennsylvania (US)
(72) Inventor: Hunt, Warren H., Jr., Monroeville Pennsylvania, 15146 (US); Staley, James T., Murrysville Pennsylvania 15668 (US); Lukasak, David A., Murrysville Pennsylvania 15668 (US); Reiser, David B., New Kensington Pennsylvania 15068 (US); Wyss, Rebecca K., Pittsburgh Pennsylvania 15239 (US); Angers, Lynette M., Monroeville Pennsylvania 15146 (US); Brown, Melvin H., Morning Sun Iowa 52640 (US); Liu, John, Lower Burrell Pennsylvania 15068 (US); Lee, Sootae, Export Pennsylvania 15632 (US)
(74) Representative: Bergen, Klaus, Dipl.-Ing.

(56) References cited:
- EP-A- 0 368 005
- CH-A- 429 198
- DE-A- 2 314 183
- FR-A- 2 518 579
- SU-A- 346 369
- SU-A- 450 846
- US-A- 3 198 676
- US-A- 4 732 610
- J.Herenguel et G.Chaudron: "Les propriétés des alliages Al-Mg-Zn", Métaux Corrosion Usure, Vol. XVI, no. 191-192, juillet-août 1941, pp. 49-52
- N.E. Paton, A.W.Sommer: "Influence of Thermomechanical Processing Treatments on Properties of Aluminum Alloys", Journal of Microstructure and Design of Alloys, vol.1, no 21, 1973, pp.101-108

## Description

The present invention relates to an aluminum alloy product having improved combinations of strength, toughness and corrosion resistance. This invention further relates to an aluminum-zinc-magnesium-copper alloy having at least about 10% greater yield strength than the Aluminum Association's 7X50-T6 aluminum, the strongest aluminum alloy currently in wide use for demanding aerospace applications such as upper wing members, with toughness and corrosion properties comparable or superior to those of 7X50-T6 aluminum

Precipitation-hardened 7575 alloy products exhibit high strength values in the T6 temper. Aluminum alloys 7050 and 7150, herein referred to as 7X50, exhibit still higher strengths in T6-type tempers. Should 7075 and 7X50 alloy products be artificially aged to a T76, T74 or T73-type temper, their resistances to stress corrosion cracking and/or exfoliation corrosion improve in the order stated (with T73 being best), but usually at some cost to strength vis-a-vis the T6 condition. The overall performance levels of 7X50 alloys greatly exceed those of 7075 aluminum, or other 7XXX alloys currently in wide aerospace use.

Another T7-type designation was recently registered for the aforementioned 7XXX alloys, that being T77 tempering which attains strength levels at or near peak strength (T6) in combination with T76, or even T74, corrosion resistance properties. Means for aging 7075 aluminum to this temper are set forth in U.S. Patent No. 4,477,292 and British Patent No. 1,480,351.

US-A-3189676 discloses thermal treatment of aluminum base alloys containing zinc, magnesium and copper as principal added elements, and wherein the amount of magnesium must be greater than the amount of copper.

GB-A-1480351 discloses a treatment of aluminium based alloys containing 4 to 8% zinc, 1.5 to 3.5% magnesium, 1 to 2.5% copper and at least one element consisting of 0.05 to 0.35% chromium, 0.1 to 0.5% manganese or 0.05 to 0.3% zirconium, the balance of the composition being aluminum and incidental elements and impurities.

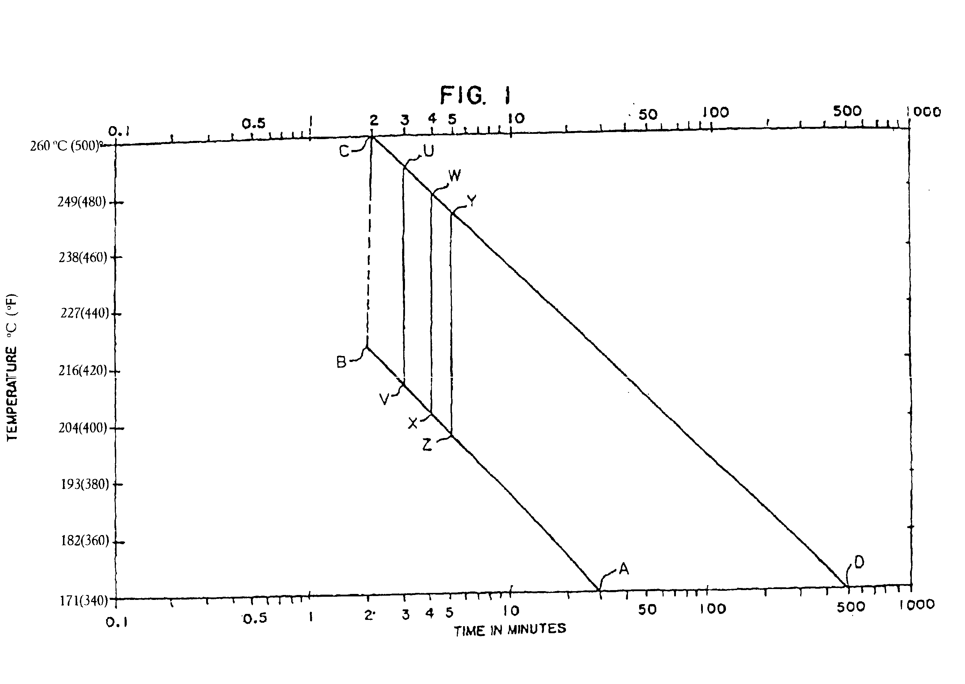

According to the present invention there is provided a process for producing an improved ingot derived alloy wrought product, which comprises the steps of:
(1) working a body having a composition consisting of 7.6 to 8.4% zinc, 1.8 to 2.1% magnesium, 2.2 to 2.6% copper, one or more elements selected from 0.05 to 0.2% zirconium, 0.05 to 0.4% manganese, 0.03 to 0.2% vanadium and 0.03 to 0.5% hafnium, the total of said elements not exceeding 0.6%, the balance aluminum plus incidental impurities, to provide a wrought product;
(2) solution treating and quenching said product; and
(3) artificially aging said product by either:
   I.
      (a) heating to one or more temperatures from 79 to 163°C. (175 to 325°F.) for 2 or more hours;
      (b) heating for a cumulative time-temperature effect within the perimeter ABCD of Figure 1; and
      (c) heating to one or more temperatures from 79 to 163°C. (175 to 325°F) for 3 or more hours; or
   II.
      (a) heating to one or more temperatures from 79 to 141°C. (175 to 255°F.) for 2 or more hours; and
      (b) heating to one or more temperatures from 148 to 174°C. (300 to 345°F.) for 5 or more hours.

This invention relates to aluminum alloy products having very high strength and specific strength (strength divided by density) values, substantially exceeding those of 7X50, while maintaining or even improving the toughness and corrosion resistance properties of the previous products; and to an improved Al-Zn-Mg-Cu alloy product having EXCO corrosion resistance levels of "EB" or better with at least about 15% greater yield strength than a similarly-sized 7X50 counterpart in the T76 condition, at least about 10% greater yield strength than a 7X50-T6 counterpart, or at least about 5% greater strength than its 7X50-T77 counterpart. When the improved alloy products of this invention are artificially aged to produce exfoliation corrosion resistance properties of "EC" or lower (EXCO levels comparable to those of 7X50-T76 products), the invention alloy will typically possess at least about 20% greater strength than its 7X50-T76 counterpart, at least about 15% greater strength than its 7X50-T6 counterpart and at least about 9% greater yield strength than a 7X50-T77 alloy counterpart product. The invention also relates to aerospace structural members, such as upper wing skin plates, extrusions or the like, from this improved high strength alloy.

The invention concerns an alloy consisting essentially of 7.6 to 8.4% zinc, 1.8 to 2.1% magnesium, 2.2 to 2.6% copper, and at least one element selected from zirconium, vanadium and hafnium present in an amount not exceeding about 0.2% for zirconium and vanadium, or about 0.5% for hafnium, the balance aluminum and incidental elements and impurities. The benefits from Zr, V and/or Hf addition may be further enhanced with up to about 0.4% manganese. As used herein, all compositional limits are by weight percent unless otherwise indicated.

The improved alloy products of this invention exhibit substantially greater combinations of yield strength, fracture toughness and corrosion resistance as shown in the accompanying Figures. Because these preferred ranges of elements do not excessively increase alloy density relative to 7X50 aluminum, significant increases in specific strength are also realized by the invention. One preferred method for artificially aging this alloy composition includes: solution heat treating; heating to one or more temperatures within 79 to 163°C. (175 to 325°F.) for 2 or more hours; heating for a cumulative time-temperature effect substantially within ABCD of accompanying Figure 1; and heating to one or more temperatures within 79 to 163°C. (175 to 325°F.) for 3 or more hours. Another set of improved properties, with only slightly lower strengths, is imparted by subjecting this alloy composition to: solution heat treatment; heating to one or more temperatures within 79 to 141°C. (175 to 285°F.) for about 2 or more hours; and heating within 148 to 174°C. (300 to 345°F.) for 2 or more hours.

Further features, other objects and advantages of this invention will become clearer from the following detailed description made with reference to the drawings in which:
Figure 1 is a graph showing preferred time-temperature treatments for imparting improved corrosion resistance to one embodiment of the invention;
Figure 2 is a graph plotting relative toughness versus longitudinal yield strength for certain 7XXX alloy products, including those made according to the intrention; and
Figure 3 is a graph plotting longitudinal yield strength versus electrical conductivity for one preferred composition treated at various second-step aging temperatures.

As used throughout this description of the invention, the following definitions shall apply:
a. The term "ksi" shall mean kilopounds per square inch.
b. The term "minimum strength" shall mean the strength level at which 99% of the product is expected to conform with 95% confidence using standard statistical methods.
c. The term "ingot-derived" shall mean solidified from liquid metal by known or subsequently developed casting processes rather than through powder metallurgy or similar techniques. The term expressly includes, but shall not be limited to, direct chill (DC) continuous casting, electromagnetic continuous (EMC) casting and variations thereof.
d. The term "7XXX" or "7000 Series", when referring to alloys, shall mean structural aluminum alloys containing zinc as their main alloying element, or the ingredient present in largest quantity.
e. The term "counterpart", when used to compare products made from different 7XXX alloys, shall mean a part or product, e.g. an extrusion, of similar shape, thickness and manufacturing history.
f. The term "7X50" shall mean any alloy currently or subsequently registered in this family or subgroup of 7XXX alloys. The term expressly includes, but shall not be limited to, 7050 aluminum and substantially identical 7150 aluminum.

For every numerical range set forth, it should be noted that all numbers within the range, including every fraction or decimal between its stated minimum and maximum, are considered to be designated and disclosed by this description. As such, a preferred elemental range of 7.6 to 8.4% zinc expressly covers zinc contents of 7.7, 7.8, 7.9% ... and so on, up to about 8.4% zinc. Similarly, artificial aging to one or more temperatures between 148 to 174°C. (300 and 345°F.) would include thermal treatments at 149, 150°C., ... 157, 158°C. (301, 302°F,...315, 316°F.),...and so on, up to the stated maximum.

For most currently used 7000 Series (or 7XXX) alloys, T-6 type are obtained by precipitation hardening within 79 to 163°C. (175 to 325°F.). Plate and extrusion products of 7075 aluminum, for example, are typically T6-aged by heating for about 24 hours at 121°C. (250°F.) in a circulatory-air furnace. Products of 7X50 aluminum, on the other hand, are first treated at 121°C. (250°F.), followed by a higher temperature treatment, within 163 to 177°C. (325 to 350°F.) to obtain optimum or peak (T6) strength.

An alternative method for thermally treating 7075 aluminum and other 7XXX alloys is set forth in British Patent No. 1,480,351, referred to hereinabove. According to this method, improved combinations of strength and corrosion resistance are imparted from a multi-stage, or "low-high-low", temperature treatment which includes solution heat treating, precipitation hardening at 79 to 163°C. (175 to 325°F.), further aging by subjecting to a temperature within 182 to 232°C. (360 to 325°F.) for a cumulative time-temperature treatment as described therein, then again precipitation hardening for 2 to 30 hours between 79 to 163°C. (175 to 325°F.).

Still higher relative strengths are attainable when 7XXX alloy products having a total zinc content ranging from 6 to 8% have been subjected to low-high-low aging conditions similar to those described directly above. Although 7XXX alloys containing relatively higher amounts of zinc (e.g. 8 to 10% or more) have been known to exhibit significantly greater strengths than 7075 aluminum for some time, they were considered commercially impractical because of their high densities relative to 7075 aluminum and because they were much more susceptible to exfoliation and stress corrosion cracking. In earlier versions of such high zinc-aluminum alloys, strength improvements usually translated into unacceptable toughness reductions as well.

In this invention, it has been determined that a particular range of elements exhibits substantially better combinations of specific strength, fracture toughness and exfoliation corrosion resistance. Improved 7XXX alloy products containing 7.6 to 8.4% zinc, 1.8 to 2.1% magnesium and 2.2 to 2.6% or copper possess significantly greater levels of strength than thcir 7X50 counterparts while maintaining, or even slightly improving their toughness and/or corrosion resistance performances, particularly when thermally treated by one of two preferred methods. For greater toughness values, the amount of magnesium in the invention alloy should be kept at or below 2 or 2.1%. For better resistance to exfoliation and stress corrosion cracking, copper contents should be maintained higher, above about 2.2%, while better combinations of strength and density (or specific strength) are achieved with relatively lower zinc contents, below about 8.1%. In any event, the total amount of zinc, magnesium and copper present should not exceed a dissolvable amount, by which it is meant an amount that can be brought into solid solution during solution heat treatment (SHT) so that fewer than one volume percent of undissolved intermetallic phases (about 1 micron in size or larger and containing Zn, Cu and/or Mg) remains after SHT. On a more preferred basis, less than one-half volume percent (0.5%) of such undissolved phases should remain after SHT. It is therefore advantageous to limit combined zinc, magnesium and copper contents to between 11.9 or 12.1% and 12.5, 12.7 or even 13%. The invention alloy should also maintain a total zinc-copper (Zn + Cu) content between about 9.9 and 11.0%.

Alloy products of this invention should further include at least one ancillary element selected from: zirconium, for instance, between 0.03 and 0.15% zirconium; vanadium, for instance, between 0.05 and 0.15% vanadium; and hafnium, for instance, between 0.03 and 0.4% hafnium. One or more of these elements may be further supplemented with at least some manganese, preferably between 0.07 or 0.1% to 0.3 or 0.35%. In any event, the total content of such ancillary elements should not exceed 0.5 or 0.6%, or an amount which may be maintained in a supersaturated state following alloy solidification. It is believed that such elements, or combinations of elements, enhance alloy performance by suppressing recrystallization to some extent, especially in cases where the alloy is cold worked prior to solution heat treatment. Unlike earlier high zinc-aluminum alloys, it is neither necessary nor sufficient for this alloy composition to include any nickel, calcium or chromium. Rather, the 7XXX products exhibiting greater combinations of properties hereunder are substantially nickel-free, calcium-free and chromium-free. By use of the term "substantially free" above, it is meant that preferably no quantity of such elements is present, it being understood, however, that alloying materials, operating conditions and equipment are not always ideal such that minor amounts of undesirable contaminants may find their way into the invention alloy. In any event, it should be further understood that the nickel content of the invention alloy are maintained below 0.04 or 0.05%, or more preferably below a maximum of 0.01 or 0.02% nickel; the calcium content should be kept below 0.015 or 0.02%, more preferably below 0.01 or 0.005% maximum; and the chromium level should be less than 0.08%, or more preferably below a maximum of 0.04 or 0.05% chromium.

It is another surprising feature that the invention alloy possesses less need to maintain its iron and silicon contents at an extremely low level. It is generally believed that Fe and Si are both harmful to toughness, but the measured fracture toughness for alloy products containing about 0.05% iron and about 0.05% silicon were similar to those values for alloys containing about 0.15% each of these impurities, both toughness levels resembling that of a 7XXX product possessing lower strength, namely 7150-T6 aluminum. Conventional metallurgical wisdom predicts that toughness properties should decrease with increasing strength unless iron and silicon contents are purposefully lowered. The invention alloy was found to offer surprisingly less sensitivity to variations in the tolerable amounts of these two impurities, however. Although total iron and/or silicon contents of about 0.2 or 0.25% maximum are more preferred, it is also possible for the invention alloy to accommodate cumulative iron and silicon concentrations up to about 0.4 or 0.5%. Thus, the invention alloy can contain about 0-04 or 0.05% or 0.06 up to 0.15% or even 0.2 or 0.25 or 0.3% each of iron and silicon. Elements other than those named hereinabove are preferably limited to 0.1 or 0.2 or possibly 0.3% maximum, more preferably 0.05% maximum. The combined total of other elements not named hereinabove is preferably not over 0.5 or 1%, more preferably not over about 0.1 or 0.2%.

Because of the combinations of properties attainable, the invention alloy is especially well suited for critical aerospace applications, such as upper wing skin panels or members (typically plate), and other high strength-high exfoliation resistance end uses. Products may be directly cast or formed into useful shapes from this alloy by any known or subsequently developed technique including rolling, forging and extrusion. The resulting sheet, plate, rod, bar or the like, may vary greatly in size and shape. For most aerospace applications, plate products made from this preferred composition may have cross-sectional thicknesses ranging from 7.6 or 8.9mm (0.3 or 0.35 inch), up to 3.8, 5.1 or even 7.6 cm or more (1.5, 2 or even 3 or more inches). It should be further understood, however, that the invention alloy may also be made into products having cross-sectional thicknesses even smaller than about 8.9 mm (0.3 inch).

The alloy products of this invention are primarily ingot-derived. Once an ingot has been cast from this composition, it is homogenized by heating to one or more temperatures between 460 and 493°C. (860° and 920°F.) after which it is worked (and sometimes machined) into a desired shape. The product, if desired, should then be solution heat treated by heating to one or more temperatures between 449 or 454°C. (840 or 850°F.) and about 471 or 482°C. (880 or 900°F.) to take substantial portions, preferably all or substantially all, of the soluble zinc, magnesium and copper into solution, it being again understood that with physical processes which are not always perfect, probably every last vestige of these main alloying ingredients will not be dissolved during SHT (solutionizing). After heating to elevated temperatures as just described, the product should be rapidly cooled or quenched to complete the solution heat treating procedure. Such cooling is typically accomplished by immersion in a suitably sized tank of cold water, though water sprays and/or air chilling may be used as supplementary or substitute cooling means. After quenching, certain products may need to be cold worked, such as by stretching, so as to relieve internal stresses. A solution heat treated (and quenched) product, with or without cold working, is then considered to be in a precipitation-hardenable condition, or ready for artificial aging according to one of two preferred methods. As used hereinafter, the term "solution heat treat" shall be meant to include quenching unless expressly stated to the contrary.

In the first preferred thermal aging treatment, precipitation-hardenable alloy product is subjected to three main aging steps, phases or treatments, although clear lines of demarcation may not exist between each step or phase. It is generally known that ramping up to and/or down from given (or target) treatment temperatures, in itself, can producc precipitation (aging) effects which can, and often need to be, teen into account by integrating such ramping conditions, and their precipitation-hardening effects, into the total aging treatment program. Such integration was described in greater detail in U.S. Patent No. 3,645,804. With ramping and its corresponding integration the three phases for thermally treating invention alloy according to this aging practice may be effected in a single, programmable furnace. For convenience purposes, though, each stage (step or phase) will be more fully described as a distinct operation hereafter. It is believed that the first stage serves to precipitation harden the alloy product; the second (higher temperature) stage then exposes alloy product to one or more elevated temperatures for increasing its resistance to exfoliation and stress corrosion cracking (SCC); while the third stage further precipitation hardens the invention alloy to a very high strength level.

In the first treatment stage summarized above, invention alloy is precipitation hardened to strengthen it, for example, to a point at or near peak strength (whether underaged or slightly overaged) although less than peak strength conditions (or underaging) may be desired in some cases. Such precipitation hardening can be accomplished by heating to one or more elevated temperatures between 79 and 163°C. (175° and 325°F.) for a significant period of time ranging from 2 or 3 hours to 30 hours or more. A substantially similar treatment may occur through gradual ramping to the second (higher temperature) treatment stage, with or without any hold time at temperature(s) in said first range. In any event, such precipitation hardening significantly strengthens the alloy over the strength level which it achieves promptly after quenching (hereinafter, "as-quenched" or "solution heat treated" strength). Such precipitation hardening improves strengths by at least 30%, and preferably by at least 40 to 50% or more, for example, about 60 or 70%, of the difference between as-quenched and peak yield strength. In other words, the precipitation hardening of aHoy product entering the second treatment (or phase) should have carried (or increased) the alloy product's yield strength by at least about 30%, and preferably more, of the way from as-quenched or solution heat treated strength (i.e., low strength) toward peak strength. This first treatment phase can also extend until the alloy achieves up to about 95% of peak strength (underaged), peak strength itself, or even until alloy strength runs slightly past peak and back down to about 95% of peak strength (through overaging). It should be understood, however, that for some embodiments, relative strengths may also increase during the second treatment phase depending on the extent to which peak strength was approached during the first treatment phase.

Following this first phase of thermal treatment, invention alloy is preferably subjected to heating at one or more elevated temperatures above about 171 or 177°C. (340 or 350°F.), preferably within the range of 182 to 260°C. (360 to 500°F.), for fw minutes or more. For instance, the effects of this treatment for a particular alloy can commence at a temperature of about 174 or 177°C- (345 or 350°F.) and continue as the temperatures are further increased such that "ramping up" and/or "ramping down" of temperatures between 174, 177 or 179°C. (345, 350 or 355°F.) and higher temperatures within the aforesaid perimeter can be taken into account and integrated into determining the equivalent aging effect within the aforesaid perimeter ABCD. This treatment may proceed for 3 or more minutes at one or more temperatures between 182 and 254°C. (360° and 490°F.); for 4 or more minutes at one or more temperatures between 182 and 249°C. (360 and 480°F.); or for 5 or more minutes at one or more temperatures between 182 and 246°C. (360 and 475°F.). The 3-, 4-, and 5-minute thresholds of ABCD in Figure 1 are shown by lines U-V, W-X and Y-Z, respectively. Typical second phase treatments include subjecting the alloy product to cumulative times and temperatures within the perimeter ABCD of Figure 1, even though one, or more than one, temperature within ABCD may be employed for such treatment. As is apparent from Figure 1, there is a correlation between time and temperature for this preferred second treatment. Generally, alloy exposure temperatures vary inversely with duration such that shorter times are used at relatively higher temperatures, while longer times are more appropriate at the lower temperatures, below about 204°C. (400°F.) or so.

When heating alloy products to one or more temperatures for "x" minutes according to this preferred second treatment phase, it is to be understood that such treatment embraces heating to any number of temperatures within said range for a cumulative time "x" above the lowest temperature of said range. As such, heating for 5 or more minutes within 182 to 246°C. (360 to 475°F.) does not require holding for 5 minutes at each or even any particular temperature within said range, but rather, that the cumulative time at all temperatures within 182 to 246°C. (360 to 475°F.) is 5 minutes or more.

It is generally believed that the foregoing second treatment phase improves this alloy's resistance to stress corrosion cracking, exfoliation and other detrimental corrosion effects. With respect to Figure 1, better properties of ScC resistance are believed achievable when heating for time-temperature effects closer to line C-D, while greater combinations of strength and cxfoliation resistance are attainable when aging at conditions closer to line A-B of Figure 1. Second phase treatments may, be carried out by immersing alloy products into a substantially hot liquid such as molten salt, hot oil or even molten metal. A furnace (hot air and/or other gases) may also be used depending on the size, shape and quantity of product to be treated. In the alternative, a fluidized bed-type apparatus may be used, said apparatus providing more rapid heating than a hot air furnace but slower, more uniform heating than a molten salt bath. Fluidised bed heat-ups are especially advantageous for presenting fewer environmental complications. Induction heaters may also be used for artificial aging according to the invention, for instance, in the second phase of this preferred method.

The heating operations of this invention can be raped-up fairly slowly such that much or even all of the treatments, especially the precipitation-hardening treatments of the first and/or third phases, can be accomplished by or during ramping to and/or -down from the elevated second phase temperature or temperatures such that there may not be discrete disruptions or interruptions between phases. However, the second phase can be considered to start when the corrosion properties star to improve. This typically involves some time at temperatures of about 182°C (360°F.) or so or more after achieving the strengthening described (precipitation-hardening) in the first phase as mentioned hereinbefore. In some embodiments, the second phase can be considered accomplished when the desired degree of corrosion resistance is achieved and the temperature is suitably lowered for third phase precipitation-hardening. However, in other cases, the corrosion resistance can improve in the third phase such that the second phase can be shortened to a level less than the desired corrosion resistance to allow for this effect.

During the third phase of this preferred treatment method, alloy product is precipitation-hardened between 79 and 163°C. (175 and 325°F.), for 2 to 30 hours or more. With such treatment, the invention alloy is able to achieve significantly higher strength levels than those attained by 7075 aluminum and other 7XXX counterparts. When aged to achieve corrosion properties comparable to those of T6-aged products, for example, having EXCO corrosion ratings of "EB" or better, the invention alloy produces minimum or guaranteeable yield strengths (compression and/or tension) at least about 15% greater than the minimum strengths for a similarly-sized, shaped and formed 7X50 alloy product aged to a T76 temper (or 7050-T76); and at least about 10% greater relative strength than a 7X50-T6 product. Minimum strengths for typical 7150-T6 products are listed in following Table 1, it being recalled that 7150-T6 is currently the strongest aluminum alloy commercially used by the aerospace industry in upper wing skins and other high strength applications. Improved alloy products of this invention also exhibit about 5% greater minimum strengths than a 7X50-T77 product at EC levcls of exfoliation resistance or better.

When the improved alloy products of this invention are thermally treated to achieve slightly lower minimum EXCO ratings of "EC" or better, their relative strengths exceed those of 7X50-T76 products (having "EB" EXCO levels or better) by at least about 20%, those of 7x50-T6 products (with "EC" EXCO values or lower) by about 15% or more; and those minimum strengths associated with 7X50-T77 aged products by about 9% or more. For the preceding percent-improvement calculations, minimum yield strengths of existing commercial alloy tempers were used rather than actual strength values (which generally run higher) since minimum strengths are usually employed for design considerations. Should actual (or typical) strengths of existing tempers be compared, the invention alloy is expected to still exhibit the same level of strength improvement, 5-20% or more, over its 7X50-T6, -T76 or -T77 counterparts.

**Table 1**

| Minimum Yield Strength Levels in Tension (ksi) | | |
|---|---|---|
| Plate: | | |
| 7150-T651 | | |
| Thickness cm (in.) | Longitudinal Strength MPa (L) | Long Transverse Strength MPa (LT) |
| 1.270-1.902 (0.500-0.749) | 537.8 (78) | 530.9 (77) |
| 1.905-2.540 (0.750-1.000) | 537.8 (78) | 537.8 (78) |
| 2.542-3.810 (1.001-1.500) | 537.8 (78) | 530.9 (77) |

| Minimum Yield Strength Levels in Tension (ksi) | | |
|---|---|---|
| Extrusion: | | |
| 7150-T651X Registered by Boeing | | |
| Thickness cm (in.) | Longitudinal Strength MPa (L) | |
| 0.635-1.267 (0.250-0.499) | 537.8 (78) | |
| 1.270-1.902 (0.500-0.749) | 537.8 (78) | |
| 1.905-5.080 (0.750-2.000) | 537.8 (78) | |

| 7150-T651X Alcoa | | |
|---|---|---|
| Thickness cm (in.) | Longitudinal Strength MPa (L) | |
| 0.635-1.267 (0.250-0.499) | 565.3 (82) | |
| 1.270-1.902 (0.500-0.749) | 572.3 (83) | |
| 1.905-5.080 (0.750-2000) | 579.2 (84) | |

Relative strength values for artificially aged alloy products of the invention will vary to some extent depending on their size, shape and method of manufacture. For example, improved plate products should consistently achieve minimum strengths of 565 to 586 MPa (82 to 85 ksi) with differing cross-sectional thicknesses. Improved extrusions, on the other hand, should attain minimum yield strengths of about 592 to 620 MPa (86 to 90 ksi) without suffering from excessive exfoliation corrosion.

The alloy products of this invention achieve high strengths while having imparted thereto corrosion resistance properties which typically exceed those associated with 7X50-T6 products. In most cases, the invention alloy exhibits SCC and exfoliation corrosion resistances which meet or exceed those of T76-aged 7XXX alloy products. Hence, when such products are thermally treated by the three-stages (or phases) described above, they possess an ability to survive 20 days or more of alternate immersion testing in a 3.5% NaCl solution without cracking while under constant stresses of about 172 MPa (25 ksi) for plate products (or at least about 117 MPa (17 ksi) for extrusions). Under other aging conditions, these improved products may withstand alternate immersion testing at constant stresses of about 241 MPa (35 ksi), thereby achieving an SCC resistance level comparable to that of T74-aged products. Exfoliation resistances of the invention alloy are also consistently improved over those levels associated with 7X50-T6 aluminum (typically an EXCO rating of "EC").

Table 2 sets forth the corrosion resistance standards currently required of 7075, 7050 and 7150 products aged to the T73, T74, T76 and T6 tempers, respectively. To determine whether commercial alloys meet these standards, a given test specimen is subjected to one of two preferred SCC tests. The first test,
usually conducted on products having short transverse thicknesses greater than about 3.81 cm (1.5 inch), subjects short transverse bar specimens, 3.2 mm (1/8 inch) in diameter, to alternate immersion testing in accordance with ASTM Standard G44-75. More specifically, these bar-shaped specimens are exposed to cycles of immersing in a 3.5% NaCI aqueous solution for 10 minutes, followed by 50 minutes of air drying while being pulled from both ends under a constant strain MPa (ksi). Such testing is carried out for a minimum of 20 days (or for less time should the specimen fail or crack before 20 days have passed). The other preferred SCC test, conducted in accordance with ASTM Standard G38-73, is typically reserved for extruded alloy products. This test consists of compressing the opposite ends of a C-shaped ring using constant strain levels and alternate immersion conditions substantially similar to those set forth above. The exfoliation test used for comparison purposes herein is more commonly known as the EXCO test as performed in accordance with ASTM Standards G34-72 and G34-79.

**Table 2**

| Corrosion Resistance Standards | | |
|---|---|---|
| Temper | SCC Stress Level MPa (ksi) | Exfoliation Requirement EXCO Test |
| T73 | 289 (42) | P - pitting; little or no exfoliation |
| T74 | 241 (35) | EA - slight or superficial exfoliation |
| T76 | 117-172 (17-25) | EB - moderate - more exfoliation than EA but still acceptable |
| T6 | <48 (<7) | EC - more exfoliation than EB - but still acceptable for some applications |

There exists another method for thermally treating alloy compositions of this invention to achieve slightly lower strength improvements than those achieved with the preferred "low-high-low" aging practice described earlier, but still higher than those strength levels associated with any 7050 and 7150 counterparts. With this second preferred aging practice, the invention alloy produces actual strengths at least about 3 to 5% greater, and as much as 11 to 14% greater, than 7X50-T6 aluminum with typically better toughness and corrosion resistance properties. The steps (or phases) to this second preferred practice, after solution heat treating, include: heating to one or more temperatures within 79 to 140°C. (175 to 285°F.) for about 2 or more hours, or more preferably, for 6 to 30 hours; and heating to one or more temperatures within 149 to 174°C. (300 to 345°F.) for about 2 or more hours, or more preferably, for 5 to 18 hours. When these same conditions are applied to a 7075 or 7X50 product, they will result in T76 corrosion resistances in combination with relative strengths below those associated with T6-type aging.

In Table 3, there is provided a general description of the 7XXX alloys comparatively analyzed for purposes of this invention, Said alloys having been generally grouped into sets based on the percentage of magnesium present therein. Table 3 lists the respective weight percents of zinc, magnesium and copper present in each 7XXX alloy; their combined total of zinc, magnesium and copper contents; the measured density for each alloy; and the respective first and second stage aging conditions employed. The third aging stage was not given a separate column in Table 3 as it was consistently 24 hours at 121 °C. (250°F.) for all alloys so listed. Table 3 also lists the tensile yield strength (TYS), specific TYS (TYS/density), compressive yield strength (CYS), and specific CYS (CYS/density) values for each alloy, followed by their respective electrical conductivity values (in terms of % IACS), said conductivity values serving as approximations of alloy corrosion resistance performance. The last columns in Table 3 then list actual EXCO test results for each alloy, and the measured Kr25 toughness values for the same, said toughness measured in accordance with ASTM Standard E561-86.

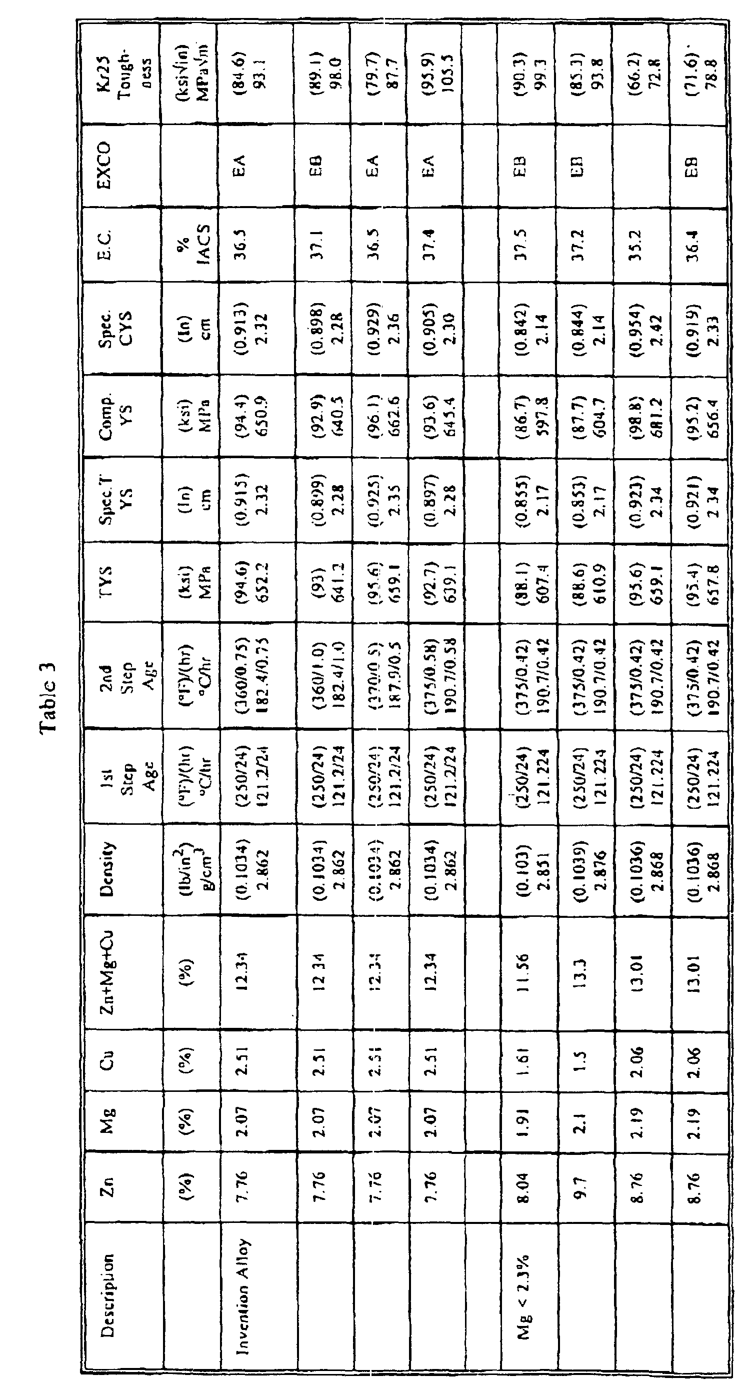

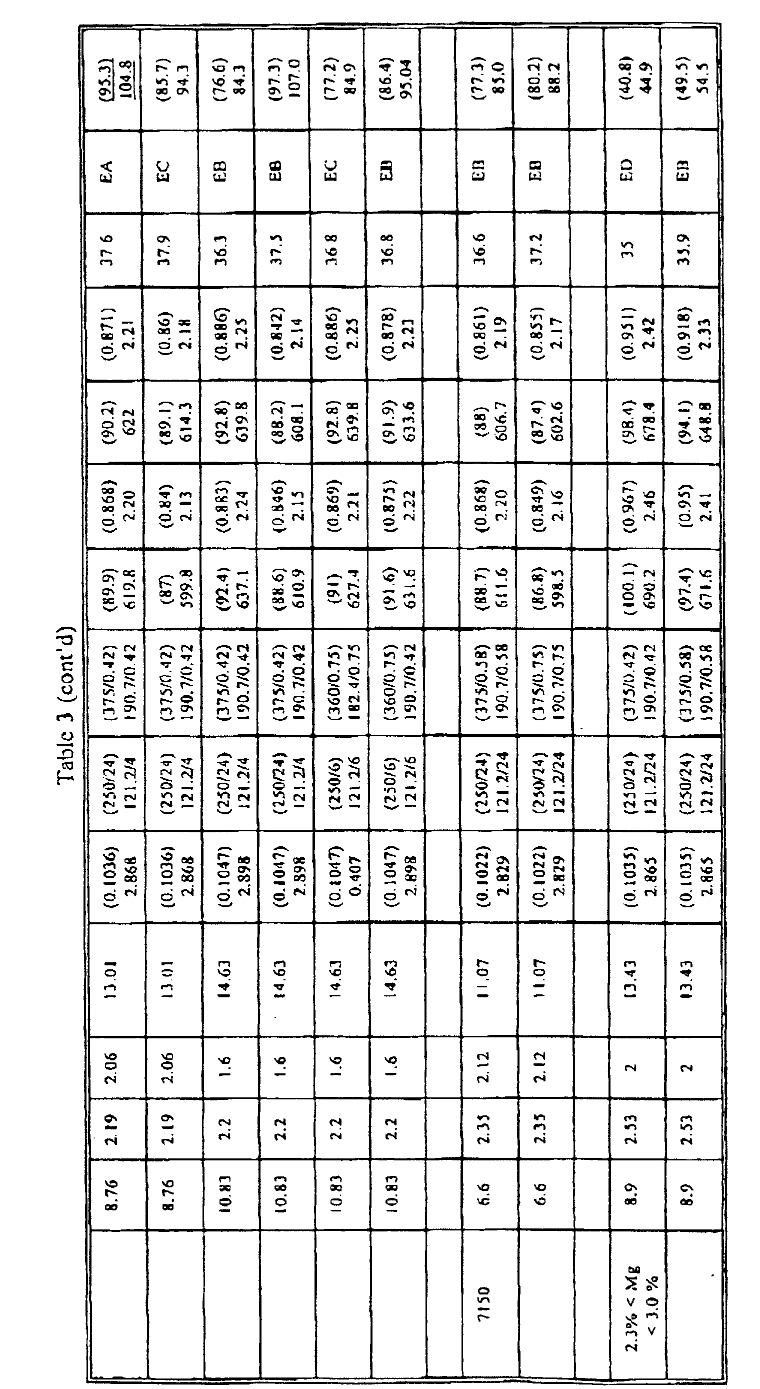

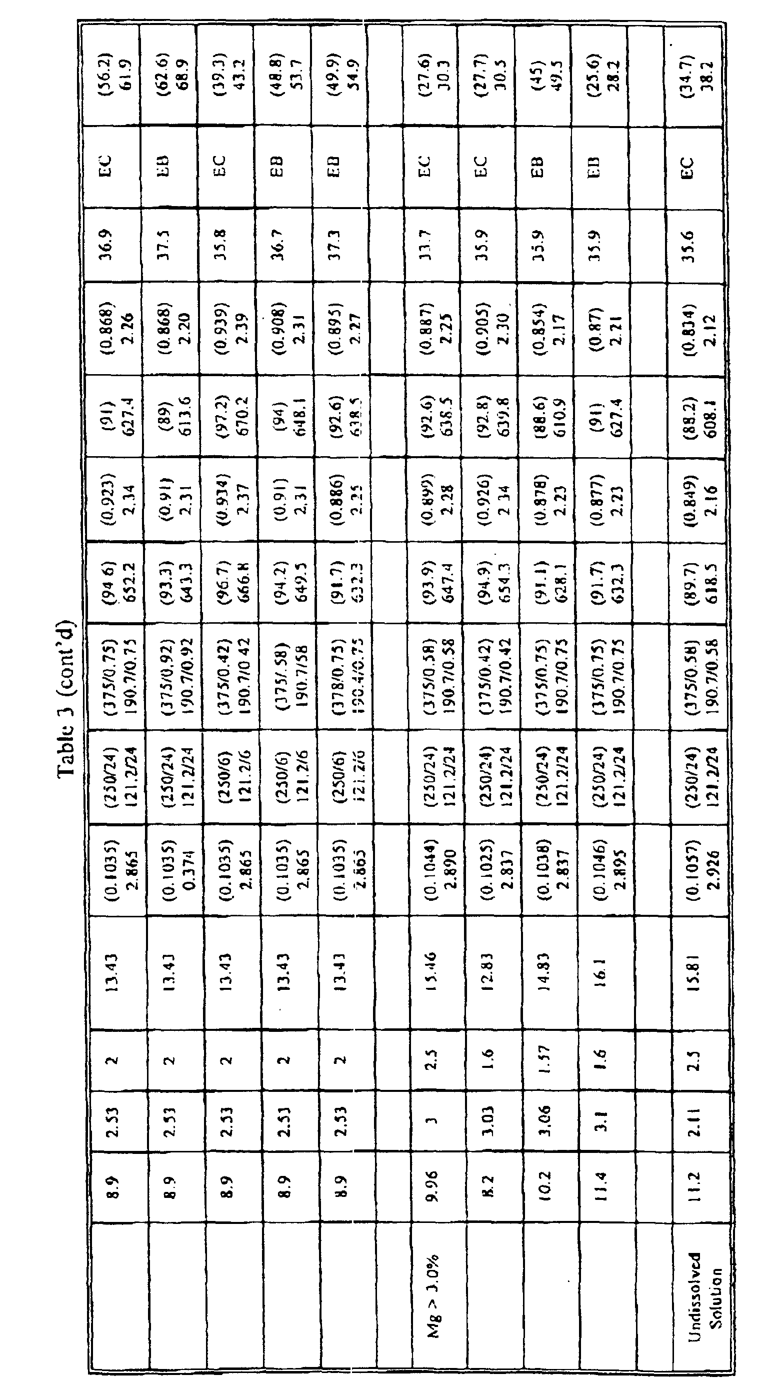

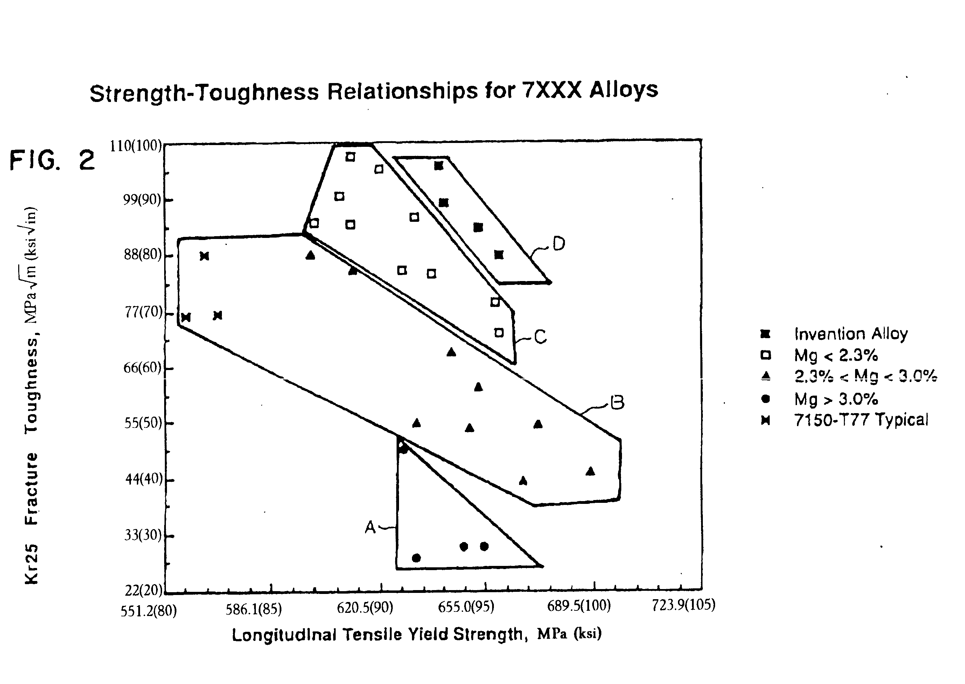

The tensile yield strength and Kr25 toughness values for the Table 3 samples were then plotted along the x and y axes, respectively, of accompanying Figure 2. It is believed that Figure 2 underscores the importance of magnesium content for the improved alloy product of this invention. In Figure 2, comparative strength/toughness data for alloys containing greater than about 3% magnesium are marked with a black circle "•" and boxed within triangle A; comparative alloys with 2.3-3% magnesium designated with a small triangle "Δ" (except for the typical strength-toughness values of 7150-T77 alloy products shown by star symbol "∗") are boxed within polygon B, while the see data for alloys containing less than about 2.3% magnesium are marked with a small square "□" and boxed by polygon C. Strength/toughness values for the preferred embodiments of this invention which also contain less than about 2-3% magnesium, are marked with a filled black square "□" and boxed in parallelogram D. Figure 2 then vividly distinguishes the improved combinations of properties attainable by this invention.

From the four groups of data points comprising Figure 2, it is made clearer how the invention achieves greater combinations of these two main properties. In Figure 2, strength levels typically increase from left to right along the horizontal (or x-axis), while toughness increase from the bottom to top of the Figure's y-axis as illustrated. Within data groupings A, B and C of Figure 2, strength increases are typically traded for better toughness properties such that higher strengths may be achieved at lower toughness and vice versa. On the other hand, parallelogram D data points for the preferred alloy composition of this invention clearly show improvement in both strength toughness by advancing outwardly along this Figure's x-axis as well as upwardly along its y-axis.

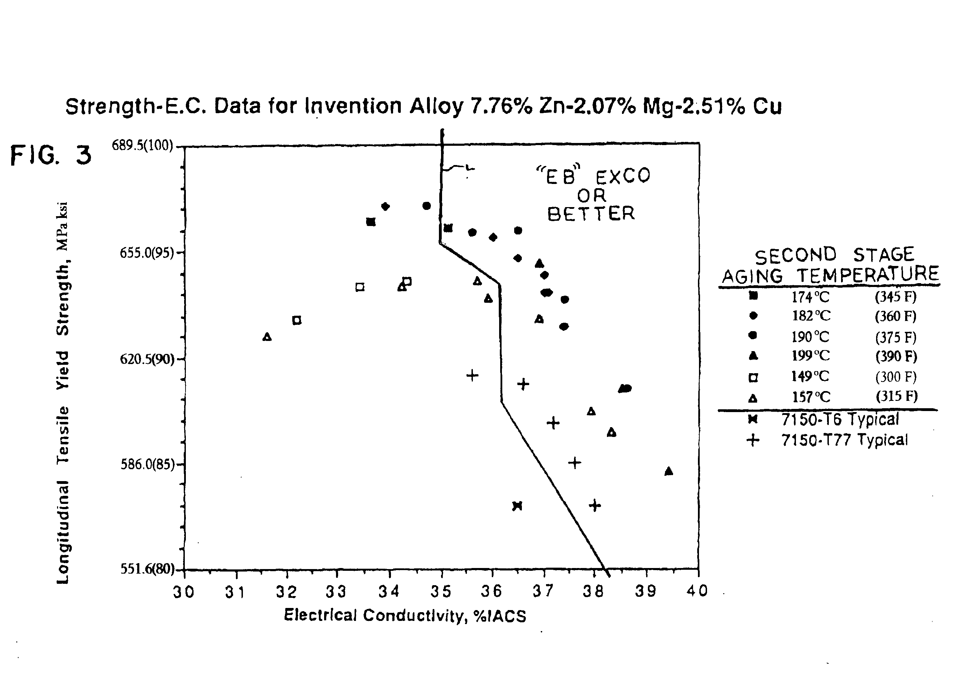

In following Table 4, 0.952 cm (0.375-inch) sections of laboratory-produced aluminum samples containing about 7.76% zinc, about 2.07% magnesium and about 2.51% copper were solution heat treated, stretched and artificially aged for various second stage times and temperatures according to the two preferred treatment methods described above. Tensile yield strengths, electrical conductivities (in terms of % IACS) and EXCO corrosion test results for each sample were then measured and plotted in accompanying Figure 3. More specifically, plotted data points for alloys subjected to preferred 3-stage aging conditions are shown by solid shapes according to the key to the right of Figure 3, while strength-E.C. values for 2-stage aged alloys are shown as hollow squares and triangles. Typical yield strengthelectrical conductivity values for 7150-T6 (shown by the star symbol "*") and 7150-T77 (shown by the plus symbol "+") were then plotted on this same graph for comparison purposes. Actual EXCO test results of "EB" or better are then shown to the right of line L midway through Figure 3. From this comparison, it is again made clear the extent to which the invention alloy outperforms its high strength 7150-T6 and 7150-T77 counterparts in terms of both strength and exfoliation resistance combinations.

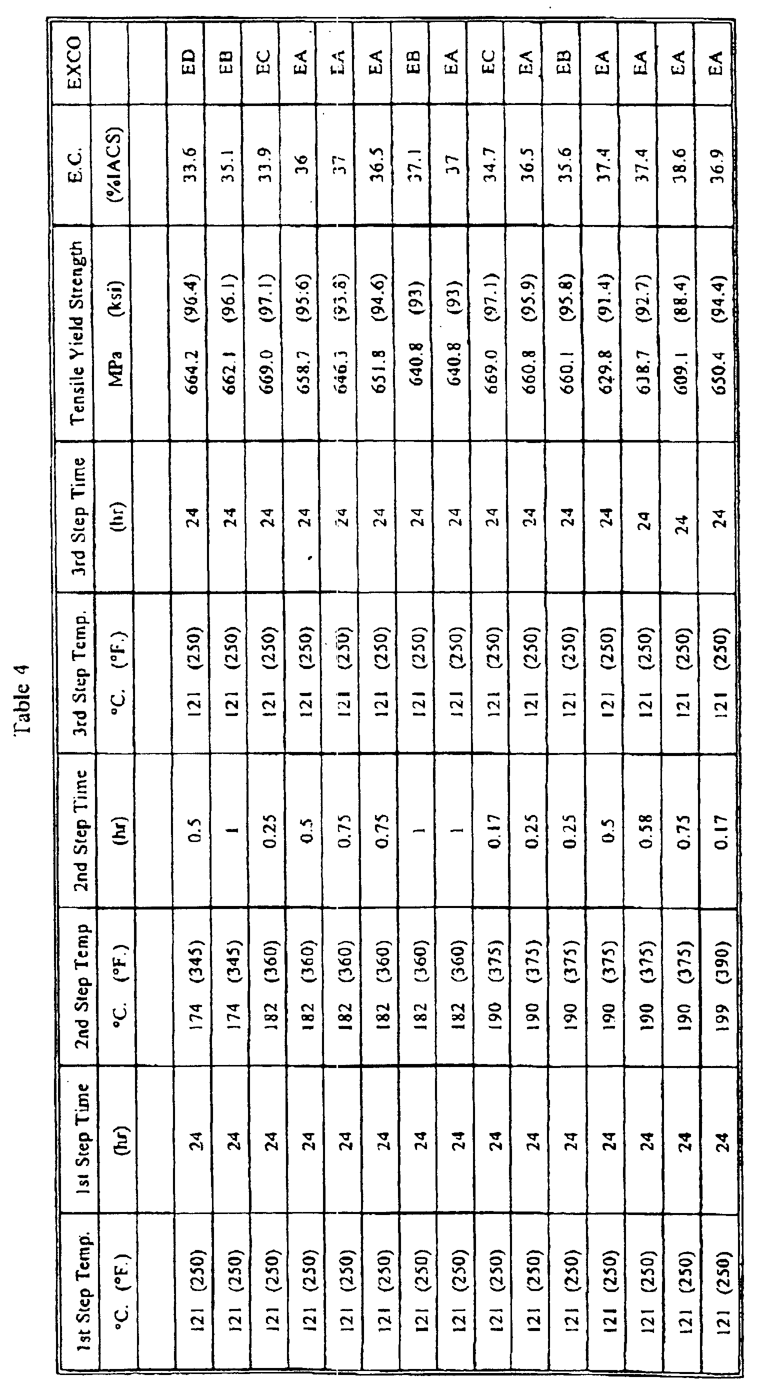

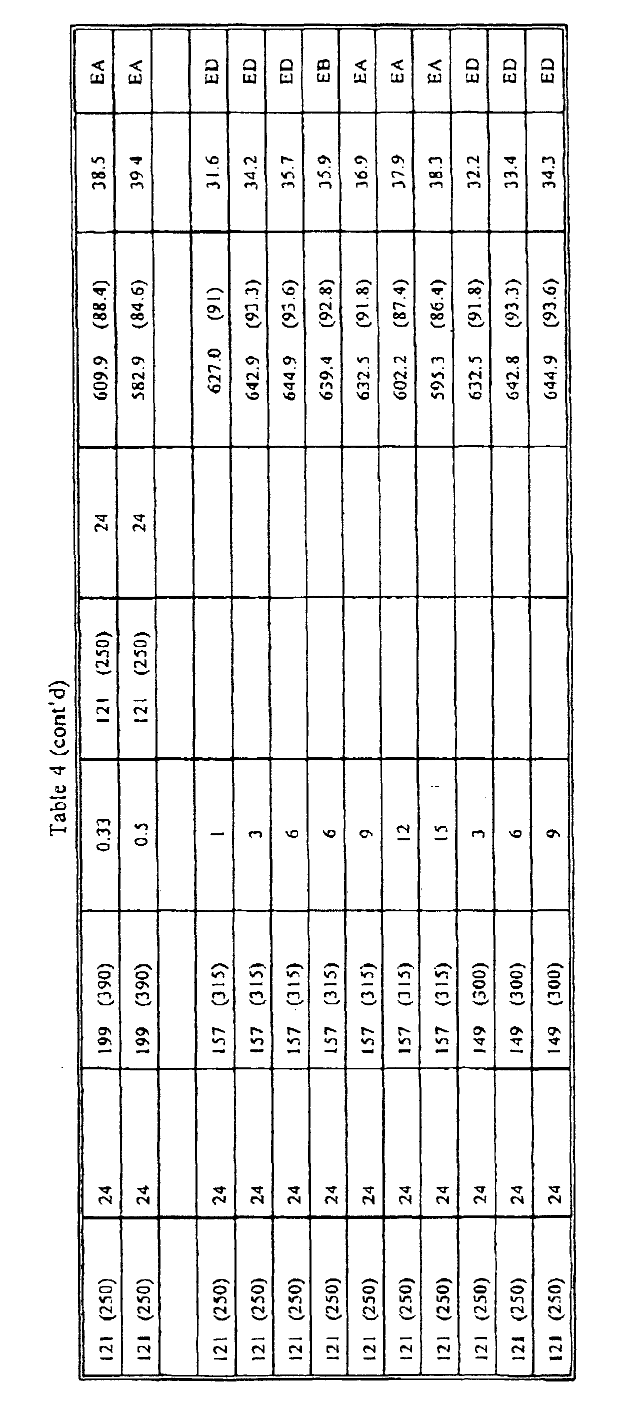

Preferred embodiments of this invention possess improved combinations of relative strengh, fracture toughness and corrosion resistance that were not previously attained with high zinc-aluminum alloys. Because such property combinations are achieved with little cost to alloy density, the invention is especially well suited for many critical aerospace applications, including upper wing assemblies and the like.

Comparative minimum for zinc, magnesium and copper should be at least about 12% although total contents of about 11 or 10.5% may also be sufficient. Comparatively, the amount of copper present exceeds the amount of magnesium present, while in other embodiments, copper is less than or equal to the magnesium amount.

Comparatively some alloys considered suitable include the examples of Table 6.

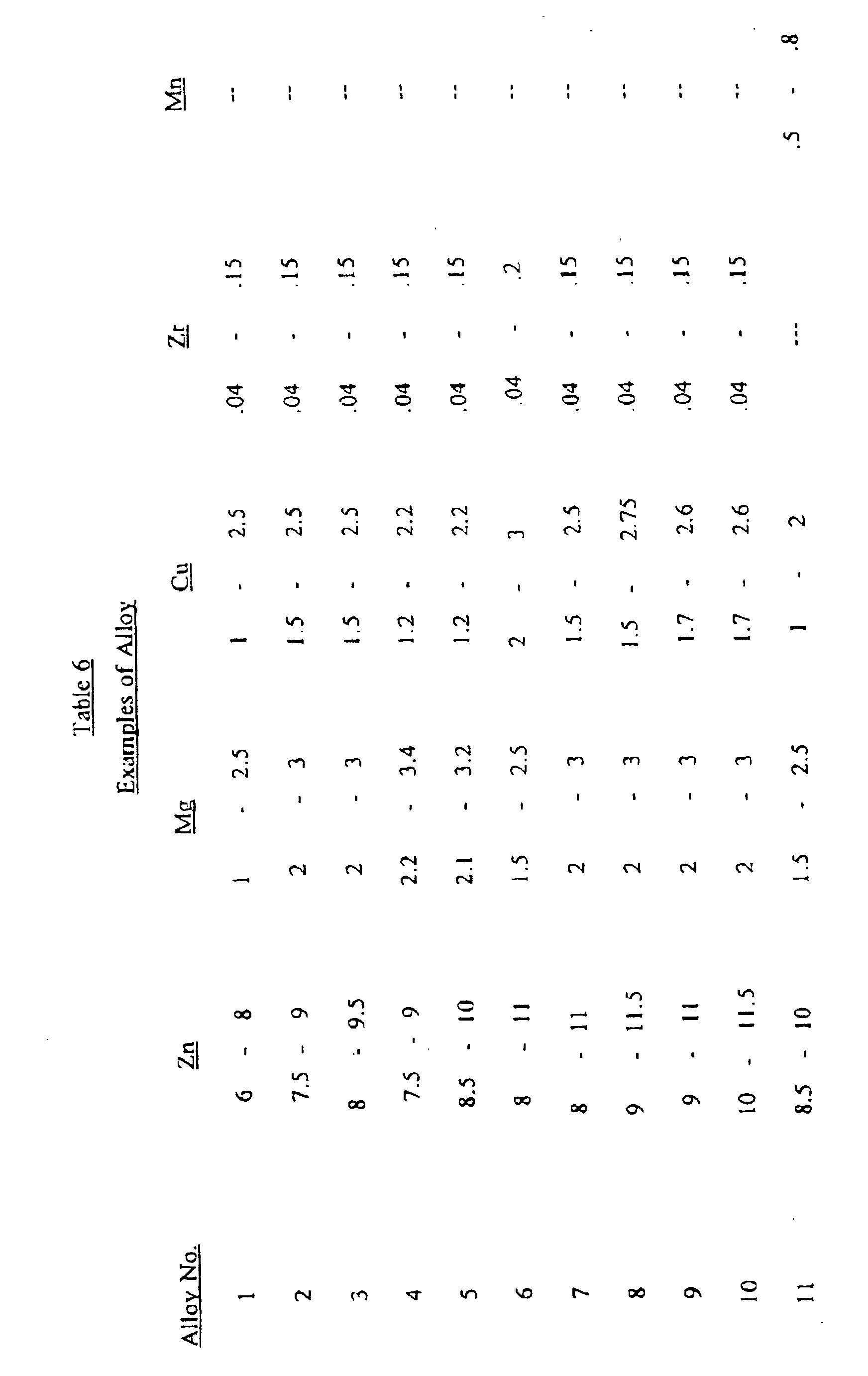

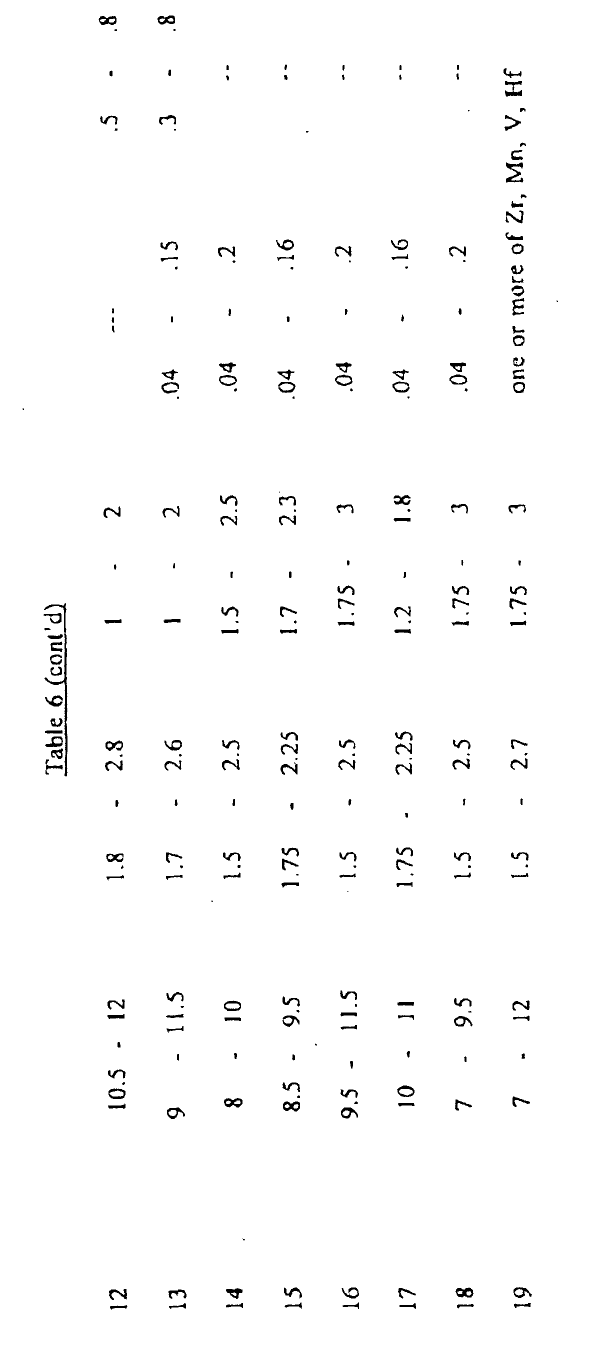

## Claims

1. A process for producing an improved ingot derived alloy wrought product, which comprises the steps of:
(1) working a body having a composition consisting of 7.6 to 8.4% zinc, 1.8 to 2.1% magnesium, 2.2 to 2.6% copper, one or more elements selected from 0.05 to 0.2% zirconium, 0.05 to 0.4% manganese, 0.03 to 0.2% vanadium and 0.03 to 0.5% hafnium, the total of said elements not exceeding 0.6%, the balance aluminum plus incidental impurities, to provide a wrought product;
(2) solution treating and quenching said product; and
(3) artificially aging said product by either:
I.
(a) heating to one or more temperatures from 79 to 163°C (175 to 325°F) for 2 or more hours;
(b) heating for a cumulative time-temperature effect within the perimeter ABCD of Figure 1; and
(c) heating to one or more temperatures from 79 to 163°C. (175 to 325°F) for 3 or more hours; or
II.
(a) heating to one or more temperatures from 79 to 141°C. (175 to 285°F) for 2 or more hours; and
(b) heating to one or more temperatures from 148 to 174°C (300 to 345°F) for 5 or more hours.

2. A process according to claim 1, wherein said body comprises 0.05 to 0.15% zirconium, 0.05 to 0.15% vanadium and 0.03 to 0.4% hafnium.

3. A process according to claim 2, wherein said body further contains 0.1 to 0.35% manganese, 0.03 to 0.1% iron and 0.03 to 0.1% silicon, provided that iron, silicon and manganese are added at the expense of the balance aluminum.

4. A process according to claim 1, wherein said body comprises 7.8 to 8.2% zinc, 1.8 to 2.1% magnesium, 2.2 to 2.5% copper, less than 0.5% in total of one or more elements selected from zirconium, vanadium, hafnium and manganese, the balance aluminum and incidental impurities.

5. An alloy produced by the process according to any of claims 1 to 4, which is a plate product having a cross-scctional thickness from 7.6 to 76mm (0.3 to 3 inches), 565 MPa (82 ksi) minimum yield strength and Kr25 fracture toughness of about 77 MPam √m(70 ksi-in ^{½}), and an EXCO exfoliation resistance level of "EB" or better.

6. An alloy product according to claim 5, which is an aerospace structural member have at least 565 MPa (82 ksi) minimum yield strength, a Kr25 fracture toughness of about 77MPa 0√m (70 kis-in^{½}) or more, and an EXCO exfoliation resistance level of "EB" or better, said structural member comprising 7.8 to 8.2% zinc, 1.8 to 2.1% magnesium, 2.2 to 2.5% copper, less than 0.5% in total of one or more elements selected from zirconium, vanadium, hafnium and manganese, less than 0.5% iron and less than 0.2% silicon, the balance aluminum and incidental elements.

7. An alloy product according to claim 6 which is an upper wing member.

8. An alloy product according to claim 5, having been subjected to treatment for four or more minutes at one or more temperatures sufficient to improve its corrosion resistance properties.

## Patentansprüche

1. Verfahren zur Herstellung eines verbesserten Knetlegierungserzeugnisses aus einem Barren, umfassend die Schritte:
(1) Kneten einer Masse mit einer Zusammensetzung aus 7,6 ... 8,4 % Zink, 1,8 ... 2,1 % Magnesium, 2,2 ... 2,6 % Kupfer, einem oder mehreren Elementen, ausgewählt aus 0,05 ... 0,2 % Zirconium, 0,05 ... 0,4 % Mangan, 0,03 ... 0,2 % Vanadium und 0,03 ... 0,5 % Hafnium, wobei die Gesamtheit dieser Elemente 0,6 % nicht überschreitet, Rest Aluminium plus zufällige Verunreinigungen, um ein Knetprodukt zu schaffen;
(2) Lösungsglühen und Abschrecken des Produkts; und
(3) beschleunigtes Altern dieses Produkts entweder durch:
I.
(a) Erhitzen auf eine oder mehrere Temperaturen von 79°C ... 163°C (175°F ... 325°F) für 2 Stunden oder mehr;
(b) Erhitzen für einen kumulativen Zeit-Temperatureffekt innerhalb des Umfanges ABCD von Fig. 1; und
(c) Erhitzen auf eine oder mehrere Temperaturen von 79°C ... 163°C (175°F ... 325°F) für 3 Stunden oder mehr; oder
II.
(a) Erhitzen auf eine oder mehrere Temperaturen von 79°C ... 141°C (175°F ... 285°F) für 2 Stunden oder mehr; und
(b) Erhitzen auf eine oder mehrere Temperaturen von 148°C ... 174°C (300°F ... 345°F) für 5 Stunden oder mehr.

2. Verfahren nach Anspruch 2, bei welchem die Masse 0,05 ... 0,15 % Zirconium, 0,05 ... 0,15 % Vanadium und 0,03 ... 0,4 % Hafnium aufweist.

3. Verfahren nach Anspruch 2, bei welchem die Masse ferner 0,1 ... 0,35 % Mangan, 0,03 ... 0,1 % Eisen und 0,03 ... 0,1 % Silicium enthält, unter der Voraussetzung, daß Eisen, Silicium und Mangan auf Kosten des restlichen Aluminium zugesetzt werden.

4. Verfahren nach Anspruch 1, bei welchem die Masse 7,8 ... 8,2 % Zink, 1,8 ... 2,1 % Magnesium, 2,2 ... 2,5 % Kupfer, weniger als 0,5 % insgesamt von einem oder mehreren der Elemente aufweist, ausgewählt aus Zirconium, Vanadium, Hafnium und Mangan, Rest Aluminium und zufällige Verunreinigungen.

5. Legierung, hergestellt nach dem Verfahren nach einem der Ansprüche 1 bis 4, welche Legierung ein Blechprodukt ist mit einer Querschnittdicke von 7,6 ... 76 mm (0,3 ... 3 inch), 565 MPa (82 ksi) Mindest-Formänderungsfestigkeit und Kr25-Bruchzähigkeit von etwa 77 MPa(m (70 ksi-in^{1/2}) und einen Wert für die EXCO-Schichtkorrosionsbeständigkeit von "EB" oder besser.

6. Legierungserzeugnis nach Anspruch 5, welches Erzeugnis ein tragendes Teil der Luft- und Raumfahrt ist, mit mindestens 565 MPa (82 ksi) Mindest-Formänderungsfestigkeit, einer Kr25-Bruchzähigkeit von etwa 77 MPa(m (70 ksi-in^{1/2}) oder mehr und einen Wert für die EXCO-Schichtkorrosionsbeständigkeit von "EB" oder besser, wobei das tragende Teil 7,8 ... 8,2 % Zink, 1,8 ... 2,1 % Magnesium, 2,2 ... 2,5 % Kupfer, weniger als 0,5 % insgesamt von einem oder mehreren Elementen aufweist, die ausgewählt werden aus Zirconium, Vanadium, Hafnium und Mangan, weniger als 0,5 % Eisen und weniger als 0,2 % Silicium, Rest Aluminium und zufällige Elemente.

7. Legierungserzeugnis nach Anspruch 6, welches Erzeugnis eine Flügeloberseite ist.

8. Legierungserzeugnis nach Anspruch 5, das einer Behandlung für 4 oder 5 Minuten bei einer oder mehreren Temperaturen unterworfen wird, die ausreichend sind, um die Korrosionsbeständigkeitseigenschaften zu verbessern. sn

## Revendications

1. Un procédé de production d'un meilleur produit en alliage corroyé à partir d'un lingot, comprenant les étapes suivantes :
(1) travailler un corps ayant une composition comprenant 7,6 à 8,4 % de zinc, 1,8 à 2,1 % de magnésium, 2,2 à 2,6 % de cuivre, un ou plusieurs éléments sélectionnés parmi 0,05 à 0,2 % de zirconium, 0,05 à 0,4 % de manganèse, 0,03 à 0,2 % de vanadium et 0,03 à 0,5 % d'hafnium, le total des dits éléments ne dépassant pas 0,6 %, le reste étant de l'aluminium plus des impuretés occasionnelles, pour fournir un produit corroyé ;
(2) traiter et tremper ledit produit dans une solution ; et
(3) vieillir artificiellement ledit produit en :
I.
(a) chauffant à une ou plusieurs températures comprises entre 79 et 163°C (175 à 325°F) pendant 2 heures ou plus ;
(b) chauffant pour un effet cumulé de temps-température situé dans le périmètre ABCD de la figure 1; et
(c) chauffant à une ou plusieurs températures comprises entre 79 et 163°C (175 à 325°F) pendant 3 heures ou plus ; ou
II. (a) chauffant à une ou plusieurs températures comprises entre 79 et 141°C (175 à 285°F) pendant 2 heures ou plus ; et
(b) chauffant à une ou plusieurs températures comprises entre 148 et 174°C (300 à 345°F) pendant 5 heures ou plus.

2. Un procédé conforme à la revendication 1, dans lequel ledit corps comprend 0,05 à 0,15 % de zirconium, 0,05 à 0,15 % de vanadium et 0,03 à 0,4 % d'hafnium.

3. Un procédé conforme à la revendication 2, dans lequel ledit corps comprend en outre 0,1 à 0,35 % de manganèse, 0,03 à 0,1 % de fer et 0,03 à 0,1 % de silicium, à condition que le fer, le silicium et le manganèse soient ajoutés aux dépens du complément en aluminium.

4. Un procédé conforme à la revendication 1, dans lequel ledit corps comprend 7,8 à 8,2 % de zinc, 1,8 à 2,1 % de magnésium, 2,2 à 2,5 % de cuivre, moins de 0,5 % au total d'un ou plusieurs éléments sélectionnés parmi le zirconium, le vanadium, l'hafnium et le manganèse, le complément étant constitué d'aluminium et d'impuretés occasionnelles.

5. Un alliage produit par le procédé d'une des revendications 1 à 4, qui est une tôle dont l'épaisseur, en section transversale, est de 7,6 à 76 mm (0,3 à 3 pouces), la résistance à la déformation est au minimum de 565 MPa (82 ksi), la tenacité à la rupture Kr25 est d'environ 77 Mpavm (70 ksi-in 1/2) et le niveau de résistance à l'écaillage EXCO est de « EB » ou mieux.

6. Un produit en alliage conforme à la revendication 5, qui est un membre structural destiné à l'aéronautique dont la résistance à la déformation est au minimum de 565 MPa (82 ksi), la tenacité à la rupture Kr25 est d'environ 77 Mpavm (70 ksi-in 1/2) ou plus et le niveau de résistance à l'écaillage EXCO est de « EB » ou mieux, ledit membre structural comprenant 7,8 à 8,2 % de zinc, 1,8 à 2,1 % de magnésium, 2,2 à 2,5 % de cuivre, moins de 0,5 % au total d'un ou plusieurs éléments sélectionnés parmi le zirconium, le vanadium, l'hafnium et le manganèse, moins de 0,5 % de fer et moins de 0,2 % de silicium, le complément étant constitué d'aluminium et d'impuretés occasionnelles.

7. Un produit en alliage conforme à la revendication 6, qui est un membre supérieur de voilure.

8. Un produit en alliage conforme à la revendication 5, ayant été soumis à un traitement pendant quatre minutes ou plus à une ou plusieurs températures suffisantes pour améliorer ses propriétés de résistance à la corrosion.
